# EUROPÄISCHE PATENTSCHRIFT

(11) **EP 0 554 471 B1**
(45) Veröffentlichungstag und Bekanntmachung des Hinweises auf die Patenterteilung: **25.10.1995**
(21) Anmeldenummer: 92101667.1
(22) Anmeldetag: 01.02.1992
(51) Int. Cl.: F28F 25/08, B01J 19/32, C02F 3/10

(54) **Einbauelement für Wärmetauscher-, Stoffaustauscher- oder Bioreaktor-Systeme**
Packing element for heat- or mass exchanger or bioreactor system
Elément de garnissage pour système d'échangeur de chaleur ou de matière ou bioréacteur

(43) Veröffentlichungstag der Anmeldung: 11.08.1993
(73) Patentinhaber: 2H KUNSTSTOFF GmbH, D-48493 Wettringen (DE)
(72) Erfinder: Hewing, Bernd, D-4434 Ochtrup (DE); Broda, Siegfried, D-4358 Haltern 6 (DE)
(74) Vertreter: Schulze Horn, Stefan, Dipl.-Ing. M.Sc.

(56) Entgegenhaltungen:
- EP-A- 0 209 898
- EP-A- 0 300 506
- EP-A- 0 361 225
- DE-A- 4 112 983
- DE-B- 1 281 457
- GB-A- 1 175 911
- US-A- 4 225 540
- US-A- 4 842 778
- US-A- 5 013 492

## Beschreibung

Die vorliegende Erfindung betrifft ein Einbauelement für Wärmetauscher-, Stoffaustauscher- oder Bioreaktor-Systeme nach dem Oberbegriff des Patentanspruches 1.

Derartige Einbauelemente finden beispielsweise als sogenannte Rieselelemente in Kühltürmen für Kraftwerke oder Chemieanlagen Verwendung. Sie schaffen große Flächen und lange Strömungswege, die in einer kompakten Raumform unterzubringen sind. Die äußere Form kann beispielsweise die eines Quaders oder eines Zylinders sein. Die fluiden Medien die derartige Einbauelemente durchströmen, verweilen darin aufgrund der Formgebung eine genügend lange Zeit für einen Wärme- oder Stoffaustausch in einer chemischen oder biologischen Reaktion, wobei es sich bei den Medien z.B. um eine durch Schwerkraft das Element durchströmende Flüssigkeit und ein durch Gebläse durch das Element befördertes Gas handeln kann.

Aus der EP-A- 0 394 718 ist ein Rieseleinbauelement bekannt zur Wärmeübertragung und/oder zum Stoffaustausch zwischen einem Gas und einer Flüssigkeit, die im Kreuzgegenstrom geführt sind, aus einer Mehrzahl von nebeneinander angeordneten Platten, die Ausprägungen in Form von Kanälen oder Kanalabschnitten zur Hindurchleitung der genannten Fluidströme aufweisen, wobei die Kanäle bzw. Kanalabschnitte eine Ausbreitung der jeweils zwischen zwei benachbarten Platten verlaufenden Fluidströme quer zu den Hauptströmungsrichtungen ermöglichen. Um bei vergleichsweise niedrigen Druckverlusten eine hohe Übertragungsleistung des Rieseleinbauelementes zu ermöglichen, sind die mit den Kanalausprägungen versehenen Platten zusätzlich quer zu den beiden Hauptausdehnungsrichtungen der Platten verformt, und zwar vorzugsweise durch eine halbkreis-, sinus- oder serpentinförmige Wellung.

Durch das vorgeschlagene Rieseleinbauelement soll die Aufgabe gelöst werden, vorbekannte Rieseleinbauelemente, welche aufgrund ihrer geometrischen Ausbildung zu Verschmutzungen und nicht ausreichender Übertragungsleistung neigen, weiterzuentwickeln und ein Rieseleinbauelement zu schaffen, das bezogen auf einen vorgegebenen Querschnitt, Druckverlust und Materialeinsatz eine wesentlich höhere Wärme- und Stoffübertragungsleistung bei gleichzeitig verringerter Verschmutzungsneigung erzielt.

Aus der EP-A- 0 401 682 ist ein Füllkörper für den Wärme- und Stoffaustausch im Kreuzgegenstrom bekannt, insbesondere für die Wasserkühlung durch Luft in Kühltürmen. Der Füllkörper weist eine Vielzahl von senkrecht oder schräg stehenden, aufeinander gelegten und miteinander verbundenen gewellten oder gefalteten Folien oder Platten auf, die so ausgebildet und/oder aufeinander gelegt oder miteinander verbunden sind, daß sich die Wellungen oder Faltungen benachbarter Folien oder Platten kreuzen. Die Wellungen oder Faltungen benachbarter Folien oder Platten gehen dabei vom oberen Teil des Füllkörpers zum unteren Teil stetig von einem kreuzenden Verlauf in einen parallelen Verlauf über.

Auch dieser Anmeldung liegt die Aufgabe zugrunde, einen Füllkörper zu schaffen, der bei einer relativ guten Wärmeaustauschrate besonders wenig anfällig gegenüber Verschmutzungen ist.

Aus einer Druckschrift der Fa. Munters, Euroform, 5100 Aachen, ist ein Füllkörper C 10 für Quer- und Gegenstromprozesse bekannt, bei dem gewellte Flächen aus PVC-Folie so aufeinander gelegt und miteinander verbunden sind, daß parallel durchlaufende Scheitel- und Sohlenbereiche zweier aufeinander befestigter Wände einen spitzen Winkel zueinander bilden, wobei die gewellten Flächen zusätzlich eine Feinprofilierung in Form von quer zu den Scheitel- und Sohlenbereichen verlaufenden Wellen aufweisen.

Der beschriebene Füllkörper soll einen günstigen Druckverlust bewirken. Eine Doppelfaltung an den Folienrändern soll günstigen Errosionsschutz erzielen.

Aus der DE-A- 39 05 696 ist ein Rieselpanel für Kühltürme und dergl. aus aufeinander befestigten Rieselwänden bekannt, letztere gefertigt aus steifer thermoplastischer Kunststoffolie, die mit rasterartig verteilten, aufstehenden Befestigungselementen ausgestattet ist, wobei bei den übereinander liegenden Rieselwänden Befestigungselemente in Form von kleinen Hohlsäulen oder Hohlkegeln oder dergl. ausgebildet sind, die von den entsprechenden Refestigungselementen der anliegenden Rieselwand fingerhut- oder druckknopfartig überstülpt sind und in einer Geraden fluchten, wobei die Rieselwände als gewellte Flächen mit parallel zueinander durchlaufenden Scheitel- und Sohlenbereichen gestaltet sind, wobei sowohl in den Scheitel- als auch in den Sohlenbereichen die genannten kompatiblen Befestigungselemente angeordnet sind, und wobei die beiden jeweils aufeinander befestigten Rieselwände derart zueinander angeordnet sind, daß die Ausrichtungen der Scheitel- und Sohlenbereiche einen Winkel β zueinander bilden.

Der letztgenannten Offenlegungsschrift liegt die Aufgabe zugrunde, die Gestaltung bekannter Rieselwände zu vereinfachen und die Verschweißungen zu verbessern und dabei auftretende Fehlstellen zu vermeiden.

Die Rieseleinbauelemente bzw. Füllkörper besitzen üblicherweise eine langgestreckte Quaderform, wobei die Länge beispielsweise etwa 2,4 m betragen kann und der Querschnitt beispielsweise 30 x 30 cm beträgt. Im Einbauzustand liegen die einzelnen Rieseleinbauelemente bzw. Füllkörper üblicherweise in einer im wesentlichen horizontalen Anordnung auf einer tragenden Unterstützungskonstruktion, wobei relativ große Spannweiten überbrückt werden. Die auftretenden Belastungen entsprechen deshalb im wesentlichen einer Balkenbiegebelastung, wobei im oberen Teil eine Druckbelastung und im unteren Teil eine Zuabelastung sowie im mittleren Teil in der neutralen Faser praktisch keine Belastung vorliegt.

Als nachteilig beim Stand der Technik werden die folgenden Punkte angesehen:
Die bekannten Einbauelemente weisen jeweils eine festgelegte Geometrie auf, die es schwierig macht, eine Anordnung von Einbauelementen für den einzelnen Anwendungsfall mit seinen spezifischen Anforderungen und Vorgaben zu optimieren. Diese spezifischen Anforderungen betreffen z.B. die Austauschkapazität, den Strömungswiderstand oder Druckabfall der Medien, die Verweildauer der Medien im Element usw., denen Vorgaben z.B. hinsichtlich der Geometrie und des Volumens des zur Verfügung stehenden Einbauraumes, hinsichtlich des zulässigen Gewichtes der Einbauelementanordnungen, hinsichtlich der statischen Eigenschafen der Einbauelemente usw. gegenüberstehen;
Die Kunststoffoliendicke ist im wesentlichen überall konstant, so daß in vielen Bereichen die Kunststoffolie dicker ist als notwendig, was zu erhöhtem Materialverbrauch und unnötig hohem Gewicht führt;
An Verschweißungspunkten kommt es häufig zur Lochbildung in den Kunststoffolien, bei mangelnder Sorgfalt unter Umständen sogar zu einem vollständigen Trennen des Schweißbereiches von der umgebenden Kunststoffolie, so daß die Verschweißung keinerlei Wirkung mehr für den Zusammenhalt der einzelnen Kunststoffolienlagen hat;
Bei geschnittenen Kunststoffolienrändern kommt es leicht zu einem Einreißen der Kunststoffolie infolge der durch das Schneiden erzeugten Mikroanrisse.

Für die vorliegende Erfindung stellt sich demnach die Aufgabe, ein Einbauelement der eingangs genannten Art hinsichtlich seiner Gebrauchseigenschaften zu verbessern und insbesondere derart weiterzuentwickeln, daß es mit relativ geringem Aufwand eine verbesserte Anpassung an unterschiedliche Anforderungen und Vorgaben des jeweiligen Anwendungsfalles erlaubt. Weiter ist es Aufgabe der vorliegenden Erfindung, das Finbauelement derart weiterzuentwickeln, daß es bei verringertem Gewicht eine erhöhte Festigkeit, insbesondere eine erhöhte Biegesteifigkeit, aufweist und mit geringer Fehlerquote herstellbar ist.

Die Lösung der Aufgabe gelingt erfindungsgemäß durch ein Einbauelement der eingangs genannten Art mit den kennzeichnenden Merkmalen des Patentanspruchs 1.

Mit der Erfindung wird vorteilhaft erreicht, daß das Einbauelement je nach Anwendung aus zwei oder mehr Elementabschnitten unterschiedlicher Charakteristik bestehen kann, wodurch die diversen Eigenschaften des einzelnen Einbauelementes oder auch einer aus einer Anzahl von diesen gebildeten Elementanordnung an die Anforderungen und Vorgaben des jeweiligen Anwendungsfalles durch geeignete Auswahl und Kombination der einzelnen Elementabschnitte angepaßt und optimiert werden können. Außerdem kann selbstverständlich, wie an sich bekannt, die Dimensionierung der Elemente und/oder Elementabschnitte variiert werden.

Eine Weiterbildung der Erfindung ist im Anspruch 2 angegeben, wobei hier ein Grund-Elementabschnitt für Kreuzgegenstrom in unterschiedlicher Weise mit einem oder mehreren Elementabschnitten für Gegenstrom kombinierbar ist.

Weiter ist für das Einbauelement bevorzugt vorgesehen, daß dessen Wände die hintereinander geschalteten Elementabschnitte übergreifend jeweils einstückig mit entsprechend dem jeweiligen Strömungsverhältnis im Elementabschnitt wechselnder Richtung der Scheitel- und Sohlenbereiche ausgebildet sind. In dieser Ausgestaltung der Erfindung laufen also die Wände einstückig über die gesamte Anordnung von hintereinander geschalteten Elementabschnitten, was ein besonders stabiles und belastbares Einbauelement ergibt. Die Wände können bei ihrer Herstellung relativ einfach mit einer entsprechend der vorgesehenen Reihenfolge der Elementabschnitte ausgebildeten, insbesondere mit ihrer Richtung von Abschnitt zu Abschnitt entsprechend ändernder Wellung versehen werden. Alternativ können auch separate Elementabschnitte erzeugt und zu dem erfindungsgemäßen Einbauelement kombiniert werden.

Bevorzugte Ausgestaltungen des Einbauelementes hinsichtlich des hydraulischen Querschnitts der Strömungswege im Element sind in den Ansprüchen 4 und 5 angegeben.

Das erfinderische Einbauelement sieht weiter vor, daß die Dicke im Bereich zwischen der Eintrittsseite und der Austrittsseite variabel ist und daß zumindest einer der an der Eintrittsseite und/oder der Austrittsseite gelegenen Randbereiche der Wände zumindest abschnittsweise verdickt ist. Dadurch ist es möglich, gerade die festigkeitsmäßig stärker beanspruchten Bereiche verdickt auszuführen und eine günstige Spannungsverteilung der durch das Eigengewicht und durch die von den durchströmenden Medien ausgeübten Kräften erzeugten mechanischen Beanspruchungen des eingebauten Einbauelementes im Betrieb zu erreichen.

Die Befestigung einzelner Wände erfolgt zweckmäßig derart, daß die Befestigungsstellen in einem abgeflachten Bereich liegende Schweißpunkte oder -flächen oder Klemmpunkte oder -flächen oder Klebepunkte oder -flächen sind. Dadurch ist ein guter Kontakt und eine gut haftende Befestigung erzielbar.

In einer weiteren vorteilhaften Ausgestaltung ist vorgesehen, daß die Wände im Bereich der Befestigungsstellen eine Verdickung aufweisen. Hierdurch steht für die Befestigung, insbesondere beim Verschweißen, mehr Material zur Verfügung und ein Ausreißen der Befestigungsstellen unter Lasteinwirkung wird verhindert.

Weiter ist vorteilhaft vorgesehen, daß die der Eintrittsseite und/oder der Austrittsseite zugewandten Kanten der Wände geschmolzene Kanten sind. Üblicherweise haben Wände nach dem Stand der Technik geschnittene Kanten, die feine Kerben, sogenannte Mikroanrisse aufweisen, die zu Spannungsspitzen und demzufolge zu fortschreitenden Einrissen führen. Durch geschmolzene Kanten wird dieser Nachteil vermieden.

Vorteilhaft ist die der Eintrittsseite zugewandte Kante der Wand in den Bereichen zwischen Scheitelbereich und Sohlenbereich bogenförmig ausgekehlt, wobei die in die Wandebene projizierte Breite zwischen dem Scheitelbereich und einem benachbarten Sohlenbereich und die größte Höhe der Auskehlung ein Verhältnis größer 10 bilden. Dadurch ergibt sich ein strömungstechnisch günstiger Querschnitt für das einströmende Fluid, wodurch ein geringerer Druckverlust erzielbar ist.

Bevorzugt wird vorgesehen, daß die Dicke der Wände im Übertragungsbereich von unverdickten zu verdickten Bereichen stetig zunimmt, wobei ein spitzer Steigungswinkelß vorgesehen ist. Dadurch ist zum einen ein günstiger Spannungsverlauf innerhalb der Kunststofffolie der Wände erzielbar, da scharfe Übergänge zu örtlich erhöhten Spannungen führen, und zum anderen ein unerwünschtes Festsetzen von Verschmutzugen ausgeschlossen. Zweckmäßig wird ein Winkel β im Bereich bis höchstens 60° vorgesehen.

Um den Wirkungsgrad der Wärme- und/oder Stoffaustäusche im Einbauelement zu erhöhen, ist es vorteilhaft, daß die Wände im Bereich zwischen Scheitelbereich und Sohlenbereich zumindest teilweise eine sich in einem Winkel zwischen etwa 10° und etwa 90° zu den parallelen Scheitel- und Sohlenbereichen erstreckende Wellung aufweisen, wobei das Verhältnis zwischen dem Abstand Scheitel-Sohlenbereich und Höhe der Wellung etwa gleich oder größer 3 beträgt.

Dabei ist in einer vorteilhaften Ausgestaltung vorgesehen, daß die Wellung parallel zueinander verlaufende Wellen aufweist. In einer anderen vorteilhaften Ausgestaltung wird vorgeschlagen, daß die Wellung zick-zack-förmig angeordnete Wellen aufweist. Eine noch andere zweckmäßige Ausgestaltung sieht vor, daß die Wellung aufeinander zu gerichtete und/oder gegeneinander versetzte und ineinander ragende kammförmige Wellen aufweist, oder daß alternativ oder auch ergänzend die Wellung parallel zueinander verlaufende Wellen aufweist, die von dem Scheitelbereich und von dem Sohlenbereich beabstandet sind.

Um den Wirkungsgrad des Einbauelementes noch weiter zu erhöhen, weisen zweckmäßig die Wellen der Wellung eine gerillte Oberfläche auf.

Zur Erzielung einer besonders hohen mechanischen Stabilität des Einbauelementes und zur Begrenzung von thermischen Dehnungs- und Schrumpfungseffekten kann vorgesehen sein, daß zumindest zwischen einzelnen Wänden sich wenigstens über einen Elementabschnitt erstreckende, glattflächige oder schwach profilierte Zwischenwände angeordnet sind.

Weiter ist in einer vorteilhaften Ausgestaltung vorgesehen, daß die Scheitel- und Sohlenbereiche zweier aufeinander befestigter Wände im Bereich nahe der Eintrittsseite und nahe der Austrittsseite aufeinanderliegend und etwa senkrecht zur Eintritts- und Austrittsseite verlaufend sowie ohne Wellung ausgebildet sind, um die Ein- und Ausströmverhältnisse für die Medien weiter zu verbessern, da diese üblicherweise etwa senkrecht auf das Einbauelement zuströmen und von dem Einbauelement möglichst senkrecht abströmen sollen.
Die Kunststoffolie besteht bevorzugt aus teilkristallinem Kunststoff oder aus einer Kunststofflegierung mit einem Polyamidanteil oder aus mindestens 50% Polypropylen oder Polypropylen-Copolymeren und Füllstoffen. Die vorgeschlagenen Materialien weisen nach der Formgebung eine gute Formstabilität und lange Haltbarkeit auf.

Um das Einbauelement auch bei erhöhten Betriebstemperaturen einsetzen zu können, ist es vorteilhaft, daß die Kunststoffolie Wärmestabilisatoren für eine Betriebstemperatur von über 80°C enthält.

Zur Senkung der Herstellkosten ist es zweckmäßig, daß die Füllstoffe Talkum oder Glaspartikel, insbesondere in Faser- oder Kugelform sind, wobei die Füllstoffe in Faserform zur Erhöhung der Festigkeit beitragen.

In einer vorteilhaften Ausgestaltung enthält die Kunststoffolie Bestandteile flammhemmender Substanzen, wobei die flammhemmenden Substanzen bevorzugt Antimon oder Antimonverbindungen oder Brom oder Bromverbindungen sind, um die Brandgefahr in einem Einbauelement zu verringern und die Betriebssicherheit von damit ausgestatteten Anlagen zu erhöhen.

Es ist zweckmäßig, daß die Kunststoffolie UV-stabilisierende Zusätze enthält, um eine Alterung des Kunststoffes unter UV-Einfluß wesentlich zu reduzieren und somit die Lebensdauer des Einbauelementes zu verlängern.

Um zusätzliche Strömungswege sowie weitere Verteilungs- und Austauschmöglichkeiten für die das Einbauelement durchströmenden Medien zur Verfügung zu stellen, kann die Kunststoffolie mit Durchbrechungen versehen sein. Dabei können die Durchbrechungen hinsichtlich ihrer Größe, Anzahl und Verteilung nach dem jeweiligen Bedarf vorgesehen werden und wahlweise schon bei der Folienherstellung oder erst später, z.B. durch Ausstanzen, erzeugt werden.

Schließlich ist speziell für ein Einbauelement in Quaderform vorgesehen, daß es an seinen senkrecht zu den Ein- und Austrittsseiten und senkrecht zu den Wandebenen liegenden Stirnseiten als Randabschluß eine parallel zu den Stirnseiten laufende, über wenigstens eine Welle reichende Wellung zur Bildung von durchgehenden reinen Gegenstrom-Strömungswegen aufweist. Hierdurch wird erreicht, daß die an den Stirnseiten des Einbauelementes ausgetragenen und dadurch für den erwünschten Austausch verlorengehenden Mediumanteile minimiert werden.

Vorteilhafte Ausgestaltungen der Erfindung werden nachfolgend anhand einer Zeichnung näher erläutert. Die Figuren der Zeichnung zeigen im einzelnen:
- Figur 1: eine Seitenansicht eines ersten Einbauelementes,
- Figur 2: ein zweites Einbauelement, ebenfalls in Seitenansicht,
- Figur 3: ein drittes Einbauelement, ebenfalls in Seitenansicht,
- Figur 4: einen Ausschnitt aus einem Einbauelement mit einer teilweise weggebrochenen vorderen Wand,
- Figur 5: einen Schnitt in Figur 4 entlang der Linie V - V,
- Figur 6: Figur 6 einen Ausschnitt in vergrößertem Maßstab zweier aufeinander gelegter Wände in einer anderen Ausgestaltung,
- Figur 7: einen Schnitt in Figur 6 entlang der Linie VII - VII,
- Figur 8: eine Seitenansicht im Ausschnitt und in vergrößerter Darstellung einer Wand in einer anderen Ausgestaltung,
- Figur 9: einen Schnitt in Figur 4 entlang der Linie IX - IX,
- Figur 10: einen Schnitt in Figur 7 entlang der Linie X - X in vergrößertem Maßstab,
- Figur 11: einen Schnitt entsprechend Figur 10 durch eine andere Ausgestaltung der Wand in vergrössertem Maßstab,
- Figur 12: einen Schnitt entsprechend Figur 10 durch eine andere Ausgestaltung der Wand in vergrößertem Maßstab,
- Figur 13: eine Seitenansicht im Ausschnitt und in vergrösserter Darstellung einer Wand in einer anderen Ausgestaltung der Wellung, und
- Figur 14: eine Seitenansicht im Ausschnitt und in vergrösserter Darstellung einer Wand mit weiteren Ausgestaltung der Wellung.

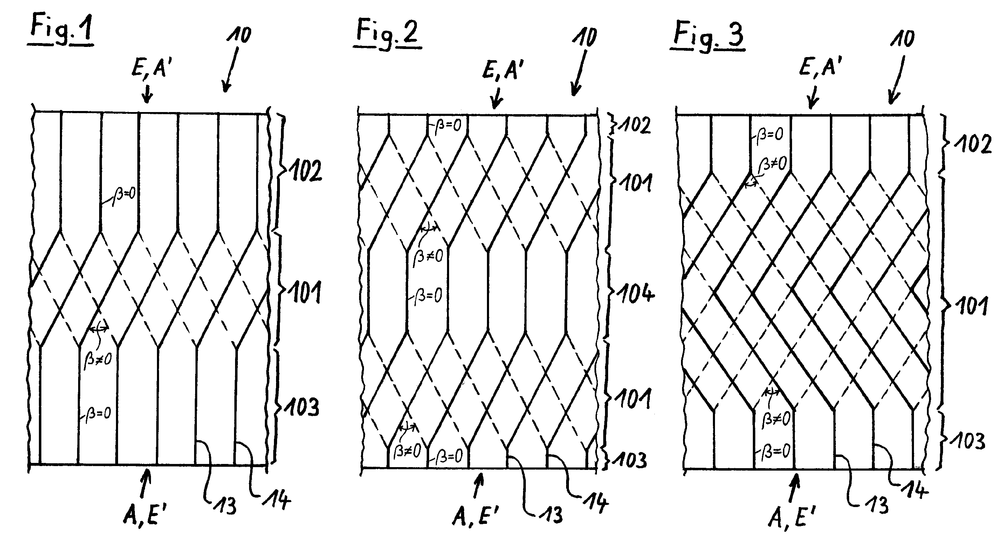

Mit Bezugnahme auf die Figuren 1 bis 3 weist ein Einbauelement von oben nach unten gesehen unterschiedlich gestaltete Elementabschnitte 101, 102, 103 und 104 auf. Die Einbauelemente 10 mit ihren unterschiedlichen Elementabschnitten 101 bis 104 werden durch eine Anzahl von hier hintereinander angeordneten Wänden gebildet, die jeweils eine Wellung mit Scheitelbereichen 13 und Sohlenbereichen 14 aufweisen. Je nach Elementabschnitt ist diese Wellung mit den Scheitel- und Sohlenbereichen 13, 14 unterschiedlich ausgebildet: In dem Elementabschnitt 101 verläuft die Wellung in einer schrägen Richtung, wobei die Wellung der nächst folgenden, hinter der sichtbaren Wand liegenden Wand entgegengesetzt schräg verlaufend ausgebildet ist, so daß sich hier ein Bereich von Strömungswegen für einen Kreuzgegenstrom mit einem Winkel β≠0 ergibt. In dem in Figur 1 über dem Elementabschnitt 101 angeordneten Elementabschnitt 102 und in dem unter dem Elementabschnitt 101 angeordneten Elementabschnitt 103 verlaufen die Wellungen parallel zueinander und in Flucht miteinander, so daß sich hier Strömungswege für einen reinen Gegenstrom mit einem Winkel β=0 ergeben. Dabei werden üblicherweise zwei Medien durch das Einbauelement 10 geleitet, wobei die obere Seite die Eintrittsseite E für das erste Medium und die Austrittsseite A′ für das zweite Medium und die Unterseite die Austrittsseite A für das erste Medium und die Eintrittsseite E′ für das zweite Medium darstellt. Üblicherweise ist das erste Medium eine Flüssigkeit, die unter Schwerkraftwirkung von oben nach unten das Einbauelement 10 durchströmt, während das zweite Medium gasförmig ist und von unten nach oben durch das Einbauelement 10 geleitet wird.

Das Ausführungsbeispiel gemäß Figur 2 zeigt zwei Elementabschnitte 101 mit β≠0 für Kreuzgegenstrom, zwischen die ein Elementabschnitt 104 mit β=0 für einen reinen Gegenstrom geschaltet ist. Eintritts- und austrittsseitig ist jeweils ein kurzer Elementabschnitt 102 und 103 mit β=0 für einen Gegenstrom der Medien angeordnet. Auch hier sind wieder die hintereinander liegenden Wände mit symmetrisch entgegengesetzt ausgerichteten Wellungen in den Elementabschnitten 101 für den Kreuzgegenstrom ausgebildet, wie dies durch die gestrichelten Linien angedeutet ist.

Das Ausführungsbeispiel gemäß Figur 3 besitzt in seinem mittleren Teil wieder einen Elementabschnitt 101 mit β=0 für einen Kreuzgegenstrom, wobei dieser eine Besonderheit insofern aufweist, als der schräge Strömungsverlauf in der Mitte des Einbauelementes 10, d.h. auf seiner halben Höhe, eine Umlenkung in eine entgegengesetzte schräge Richtung erfährt. Auch hier ist wieder je ein Elementabschnitt 102 und 103 mit β=0 oberhalb und unterhalb des Elementabschnittes 101 vorgesehen.

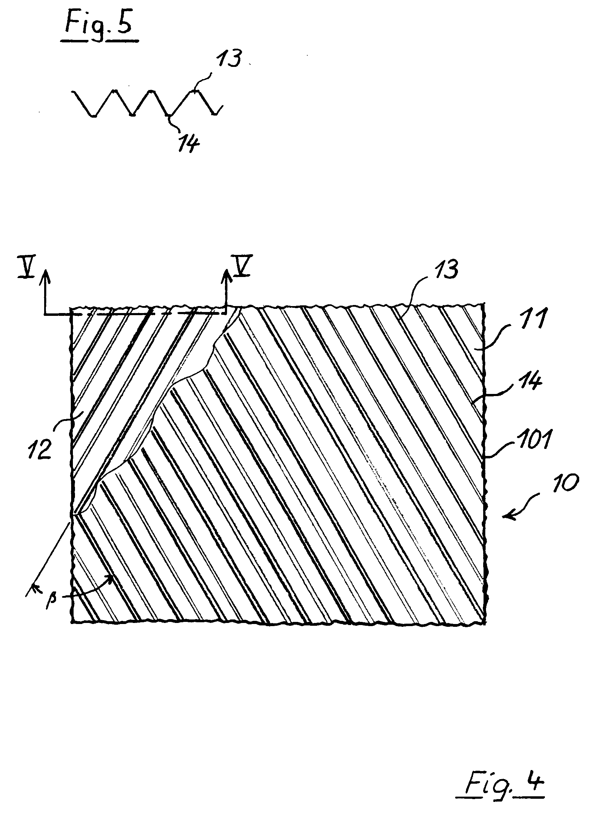

Mit Bezugnahme auf Figur 4, die einen Elementabschnitt 101 in einem vergrößerten Ausschnitt zeigt, weist das Einbauelement 10 aufeinander liegende Wände 11, 12 auf. Es sind in Figur 1 nur die beiden Wände 11, 12 sichtbar. Hinter der Wand 12 liegt eine weitere Wand in der gleichen Lage wie Wand 11, dahinter noch eine weitere Wand in der gleichen Lage wie Wand 12 usw., bis ein Einbauelement des benötigten Ausmaßes vorliegt, das in dieser Ausgestaltung bevorzugt die Form eines Quaders hat.

An den Wänden 11 und 12 sind durchlaufende Scheitelbereiche 13 und Sohlenbereiche 14 vorhanden, die den Wänden ihre gewellte Form geben. Die Scheitelbereiche 13 und die dazu parallel verlaufenden Sohlenbereiche 14 der Wand 11 bilden mit den entsprechenden Scheitel- und Sohlenbereiche der Wand 12 im Elementabschnitt 101 einen Winkel β.

Figur 5 zeigt die Gestalt der gewellten Wand 12 mit den Scheitelbereichen 13 und den Sohlenbereichen 14.

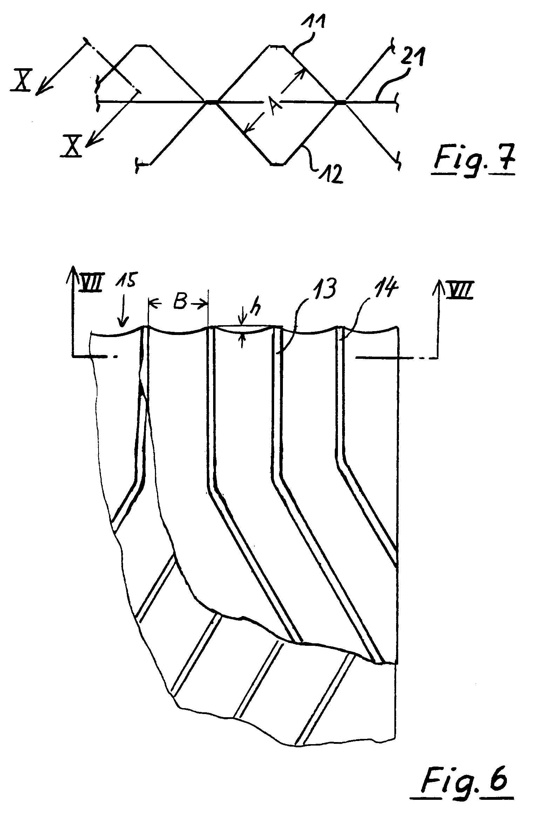

Figur 6 zeigt eine Rand-Ausgestaltung eines Einbauelementes mit zwei aufeinander liegenden Bereichen an der Eintrittsfläche, wobei die Scheitelbereiche 13 und die Sohlenbereiche 14 der Wände abgeknickt sind, so das sie im Bereich nahe der Kante 15 mit den Scheitel- bzw. Sohlenbereichen aufeinander liegen. Die aufeinander liegenden Scheitel- und Sohlenbereiche der benachbarten Wände weisen eine auf die Kunststoffolienebene projezierte Breite B auf. Über die Breite B sind die Wände bogenförmig ausgekehlt, wobei die größte Höhe der Auskehlung h ist. Vorteilhaft ist B zu h größer 10, um günstige Strömungsverhältnisse der Medien zu erzielen.

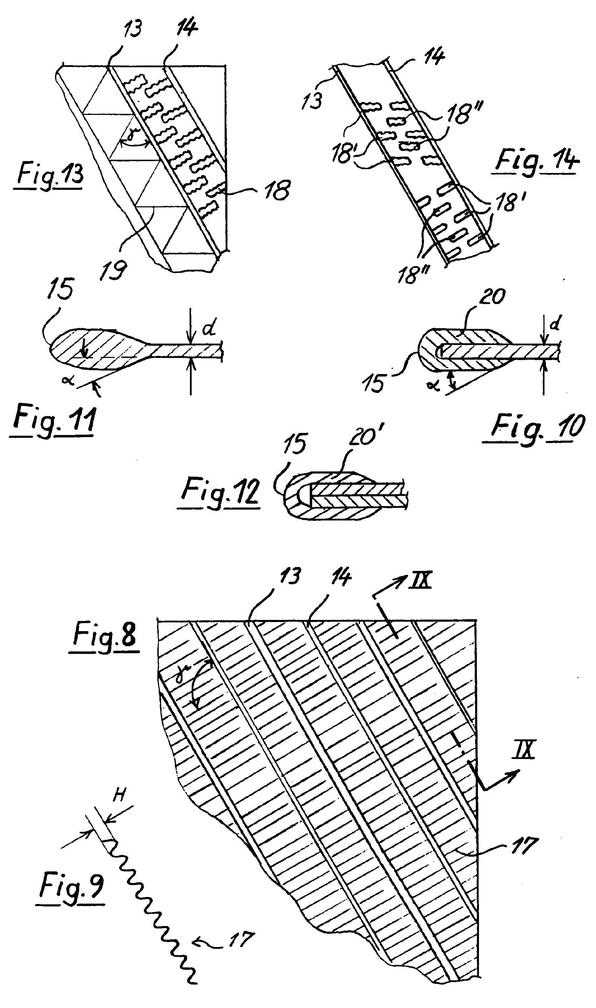

In Figur 7 sind die durch die aufeinander gelegten Scheitel- und Sohlenbereiche 13, 14 gebildeten Strömungskanäle gezeigt, wobei der Abstand zwischen etwa parallel verlaufenden Flächen der gewellten Wände A beträgt. Eine Zwischenwand 21, wahlweise mit Durchbrechungen, kann zur Stabilisierung eingefügt sein.

Figur 8 zeigt eine weitere Ausgestaltung einer Wand 11 eines Einbauelementes 10 im Ausschnitt und mit durchlaufenden, parallelen Scheitelbereichen 13 und Sohlenbereichen 14. Die Wandbereiche zwischen Scheitel- und Sohlenbereichen weisen in dieser Ausgestaltung eine Wellung auf, die aus in einem Winkel γ zum Scheitel und Sohlenbereich verlaufenden, durchgehenden, parallelen Wellen 17 besteht.

Die Wellen 17 sind in Figur 9 im Schnitt dargestellt, wobei die Wellen eine Höhe H aufweisen.

Figur 10 zeigt in einer weiteren Ausgestaltung stark vergrößert einen Randbereich einer Wand aus einer Kunststoffolie mit einer Dicke d, wobei ein weiterer Kunststoffstreifen 20 mit der Kunststoffolie zusammengeschmolzen ist, der einen allgemein U-förmigen Querschnitt aufweist, wobei die beiden Schenkel des U den Folienrand umgreifen und an ihren freien Enden mit einem Winkel α in die Folienebene übergehen. Der äußere Bereich des allgemein U-förmigen Querschnitts bildet in dieser Ausgestaltung den Rand 15 der Wand.

Figur 11 zeigt eine noch weitere Ausgestaltung eines Randbereiches mit der Kante 15 einer Wand aus einer Kunststoffolie mit der Dicke d, wobei die Verdickung, die ebenfalls mit einem Winkel α in die Folienebene übergeht, durch Extrudieren eines Kunststoffschmelzebandes mit einem entsprechend geformten Extruderkopf bzw. zugehörigen Schmelzeformwerkzeug hergestellt wurde.

Anstelle eines aufgeschmolzenen weiteren Kunststoffstreifens 20 kann auch ein U-förmiger Kunststoffclip 20′ auf den Folienrand aufgeschoben und beispielsweise durch Klemmen oder Schweißen oder Kleben befestigt werden. Figur 12 zeigt eine solche Befestigung mit einem Kunststoffclip 20′ zweier aufeinander liegender Wandbereiche, wobei der Kunsstoffclip 20′ als Montagehilfe vor dem eigentlichen Befestigen einsetzbar ist.

In Figur 13 ist eine noch weitere Ausgestaltung einer Wellung zwischen Scheitelbereich 13 und Sohlenbereich 14 einer Wand dargestellt, wobei kammförmig ineinander ragende, parallele, etwa quer zum Scheitel- und Sohlebereich verlaufende Wellen 18 vorgesehen sind, die in sich noch eine Rillung aufweisen.

Weiter ist in Figur 10 schematisch angedeutet, daß die Wellen 19 in einer noch weiteren Ausgestaltung zick-zack-förmig zwischen Scheitel- und Sohlenbereich verlaufen, wobei ihre Wellenkämme den Winkel γ mit dem Scheitelbereich bilden.

Figur 14 schließlich zeigt weitere Ausgestaltungen von Wellungen zwischen Scheitelbereich 13 und Sohlenbereich 14, wobei Wellen 18′ kammartig einander gegenüber stehend und voneinander zwischen den Kammspitzen beabstandet angeordnet sind.

Weiter sind in Figur 14 Wellen 18˝ dargestellt, die zwischen den Wellen 18′ dergestalt angeordnet sind, daß sie von den Scheitelbereichen 13 und den Sohlenbereichen 14 beabstandet sind.

Die Wellen 18′, 18˝ im oberen Bereich der Figur 14 weisen zudem eine Rillung auf und haben einen anderen Winkel γ als die im unteren Bereich der Figur 11 gezeigten Wellen 18′, 18˝.

Üblicherweise sind die Wellen 17, 18, 18′, 18˝, 19 jeweils einheitlich auf einer Wand; nur aus Gründen der Darstellung werden sie in der Figur 10 und 11 nebeneinander gezeigt.

## Patentansprüche

1. Einbauelement (10) für Wärmetauscher-, Stoffaustauscher- oder Bioreaktor-Systeme, wobei das Element (10) entlang von darin gebildeten Strömungswegen von zwei in Austausch oder Reaktion miteinander tretenden fluiden Medien im Gegen- oder Kreuzgegenstrom durchströmbar ist, wobei das Element (10) eine Eintrittsseite (E) und eine Austrittsseite (A) für das erste Medium und eine Eintrittsseite (E′) und eine Austrittsseite (A′) für das zweite Medium aufweist, wobei das Element (10) aus mindestens zwei aufeinander befestigten Wänden (11, 12) der Dicke d aus thermoplastischer Kunststoffolie besteht, wobei die Wände (11, 12) jeweils als gewellte Flächen mit im wesentlichen parallel laufenden Scheitelbereichen (13) und Sohlenbereichen (14) gestaltet sind, wobei in den Scheitel- und Sohlenbereichen (13, 14) Befestigungsstellen angeordnet sind und wobei zwei benachbarte, aufeinander befestigte Wände (11, 12) derart zueinander angeordnet sind, daß die Ausrichtungen der Scheitel- und Sohlenbereiche (13, 14) einen Winkel β zueinander bilden,
**dadurch gekennzeichnet,**
daß das Einbauelement (10) in Strömungsrichtung des einen der zwei fluiden Medien gesehen aus modular hintereinandergeschalteten Elementabschnitten (101, 102, 103, 104) besteht, wobei sich jeweils von einem Elementabschnitt (101 - 104) zum nächstfolgenden Elementabschnitt (101 - 104) das Strömungsverhältnis zwischen den beiden fluiden Medien von Gegenstrom mit einem Winkel β = 0 in Kreuzgegenstrom mit einem Winkel β ≠ 0 oder von Kreuzgegenstrom mit einem Winkel β ≠ 0 in Gegenstrom mit einem Winkel β = 0 ändert.

2. Einbauelement nach Anspruch 1, dadurch gekennzeichnet, daß ein Grund-Elementabschnitt (101) mit Strömungswegen für einen Kreuzgegenstrom mit einem Winkel β zwischen 10 und 120° ausgebildet ist und daß diesem Grund-Elementabschnitt (101) ein Elementabschnitt (102) mit Strömungswegen für einen Gegenstrom mit einem Winkel β = 0 vorgeschaltet und/oder ein Elementabschnitt (103) mit Strömungswegen für einen Gegenstrom mit einem Winkel β = 0 nachgeschaltet ist und/oder daß ein Elementabschnitt (104) mit Strömungswegen für einen Gegenstrom mit einem Winkel β = 0 in den Verlauf des Grund-Elementabschnittes (101) eingeschaltet ist.

3. Einbauelement nach Anspruch 1 oder 2, dadurch gekennzeichnet, daß dessen Wände (11, 12) die hintereinander geschalteten Elementabschnitte (101 - 104) übergreifend jeweils einstückig mit entsprechend dem jeweiligen Strömungsverhältnis im Elementabschnitt (101 - 104) wechselnder Richtung der Scheitel- und Sohlenbereiche (13, 14) ausgebildet sind.

4. Einbauelement nach einem der vorangegangenen Ansprüche, dadurch gekennzeichnet, daß die Strömungswege in den Elementabschnitten (101) für Kreuzgegenstrom einerseits und die Elementabschnitte (102 - 104) für Gegenstrom andererseits mit unterschiedlichem hydraulischen Querschnitt ausgebildet sind.

5. Einbauelement nach Anspruch 4, dadurch gekennzeichnet, daß der hydraulische Querschnitt der Strömungswege in den Elementabschnitten (102 - 104) für Gegenstrom größer ist als in den Elementabschnitten (101) für Kreuzgegenstrom.

6. Einbauelement nach einem der vorangegangenen Ansprüche, dadurch gekennzeichnet, daß die Dicke d der Wände (11, 12) im Bereich zwischen der Eintrittsseite (E, E′) und der Austrittsseite (A, A′) variabel ist und daß zumindest einer der an der Eintrittsseite (E, E′) und/oder der Austrittsseite (A, A′) gelegenen Randbereiche der Wände (11, 12) zumindest abschnittsweise verdickt ist.

7. Einbauelement nach einem der vorangegangenen Ansprüche, dadurch gekennzeichnet, daß die Befestigungsstellen in einem abgeflachten Bereich liegende Schweißpunkte oder -flächen oder Klemmpunkte oder -flächen oder Klebepunkte oder -flächen sind.

8. Einbauelement nach einem der vorangegangenen Ansprüche, dadurch gekennzeichnet, daß die Wände (11, 12) im Bereich der Befestigungsstellen eine Verdickung aufweisen.

9. Einbauelement nach einem der vorangegangenen Ansprüche, dadurch gekennzeichnet, daß die der Eintrittsseite (E, E′) und/oder der Austrittsseite (A, A′) zugewandten Kanten der Wände (11, 12) geschmolzene Kanten (15) sind.

10. Einbauelement nach einem der vorangegangenen Ansprüche, dadurch gekennzeichnet, daß die der Eintrittsseite (E, E′) zugewandte Kante der Wand (11, 12) in den Bereichen zwischen Scheitelbereich (13) und Sohlenbereich (14) bogenförmig ausgekehlt ist, wobei die in die Wandebene projizierte Breite B zwischen dem Scheitelbereich (13) und einem benachbarten Sohlenbereich (14) und die größte Höhe h der Auskehlung das Verhältnis B/h > 10 bilden.

11. Einbauelement nach einem der Ansprüche 6 bis 10, dadurch gekennzeichnet, daß die Dicke d der Wände (11, 12) im Übergangsbereich von unverdickten zu verdickten Bereichen stetig zunimmt, wobei der Steigungswinkel α ≦ 60° ist.

12. Einbauelement nach einem der vorangegangenen Ansprüche, dadurch gekennzeichnet, daß die Wände (11, 12) im Bereich zwischen Scheitelbereich (13) und Sohlenbereich (14) zumindest teilweise eine sich in einem Winkel zwischen etwa 10° und etwa 90° zu den paralellen Scheitel- und Sohlenbereichen erstreckende Wellung aufweisen, wobei der Abstand A Scheitel-Sohlenbereich und die Höhe H der Wellung das Verhältnis A/H ≧ 3 bilden.

13. Einbauelement nach Anspruch 12, dadurch gekennzeichnet, daß die Wellung parallel zueinander verlaufende Wellen (17) aufweist.

14. Einbauelement nach Anspruch 12 oder 13, dadurch gekennzeichnet, daß die Wellung zick-zack-förmig angeordnete Wellen (19) aufweist.

15. Einbauelement nach einem der Ansprüche 12 bis 14, dadurch gekennzeichnet, daß die Wellung aufeinander zu gerichtete und/oder gegeneinander versetzte und ineinander ragende kammförmige Wellen (18, 18′) aufweist.

16. Einbauelement nach einem der vorangegangenen Ansprüche 12 bis 15, dadurch gekennzeichnet, daß die Wellung parallel zueinander verlaufende Wellen (18˝) aufweist, die von dem Scheitelbereich (13) und von dem Sohlenbereich (14) beabstandet sind.

17. Einbauelement nach einem der vorangegangenen Ansprüche 12 bis 16, dadurch gekennzeichnet, daß die Wellen (17, 18, 18′, 18˝, 19) der Wellung eine gerillte Oberfläche aufweisen.

18. Einbauelement nach einem der vorangegangenen Ansprüche, dadurch gekennzeichnet, daß zumindest zwischen einzelnen Wänden (11, 12) sich wenigstens über einen Elementabschnitt (101 - 104) erstreckende, glattflächige oder schwach profilierte Zwischenwände (21) angeordnet sind.

19. Einbauelement nach einem der vorangegangenen Ansprüche, dadurch gekennzeichnet, daß die Scheitel- und Sohlenbereiche (13, 14) zweier aufeinander befestigter Wände (11, 12) im Bereich nahe der Eintrittsseite (E, E′) und nahe der Austrittsseite (A, A′) aufeinanderliegend und etwa senkrecht zur Eintritts- und Austrittsseite (E, E′, A, A′) verlaufend sowie ohne Wellung ausgebildet sind.

20. Einbauelement nach einem der vorangegangenen Ansprüche, dadurch gekennzeichnet, daß die Kunststoffolie aus teilkristallinem Kunststoff besteht.

21. Einbauelement nach einem der vorangegangenen Ansprüche, dadurch gekennzeichnet, daß die Kunststoffolie aus einer Kunststofflegierung mit einem Polyamidanteil besteht.

22. Einbauelement nach einem der vorangegangenen Ansprüche, dadurch gekennzeichnet, daß die Kunststoffolie mindestens 50% Polypropylen oder Polypropylen-Copolymere und Füllstoff enthält.

23. Einbauelement nach einem der vorangegangenen Ansprüche, dadurch gekennzeichnet, daß die Kunststoffolie Wärmestabilisatoren für eine Betriebstemperatur von über 80°C enthält.

24. Einbauelement nach Anspruch 22 oder 23, dadurch gekennzeichnet, daß die Füllstoffe Talkum oder Glaspartikel, insbesondere in Faser- oder Kugelform, sind.

25. Einbauelement nach einem der vorangegangenen Ansprüche, dadurch gekennzeichnet, daß die Kunststoffolie Bestandteile flammhemmender Substanzen enthält.

26. Einbauelement nach Anspruch 25, dadurch gekennzeichnet, daß die flammhemmenden Substanzen Antimon oder Antimonverbindungen oder Brom oder Bromverbindungen sind.

27. Einbauelement nach einem der vorangegangenen Ansprüche, dadurch gekennzeichnet, daß die Kunststoffolie UV-stabilisierende Zusätze enthält.

28. Einbauelement nach einem der vorangegangenen Ansprüche, dadurch gekennzeichnet, daß die Kunststoffolie mit Durchbrechungen versehen ist.

29. Einbauelement nach einem der vorangegangenen Ansprüche, wobei dieses im wesentlichen eine Quaderform aufweist, dadurch gekennzeichnet, daß es an seinen senkrecht zu den Ein- und Austrittsseiten (E, E′, A, A′) und senkrecht zu den Wandebenen liegenden Stirnseiten als Randabschluß eine parallel zu den Stirnseiten laufende, über wenigstens eine Welle reichende Wellung zur Bildung von durchgehenden reinen Gegenstrom-Strömungswegen aufweist.

## Claims

1. A packing element (10) for heat- or mass exchangers or bioreactor systems wherein two fluid mediums flow through the element along flow paths formed therein with the fluid mediums in a reacting or exchanging relation with each other in a reverse current or cross reverse current, with the element (10) comprising an entry side (E) and an exit side (A) for the first medium and an entry side (E′) and an exit side (A′) for the second medium, with the element (10) consisting of at least two walls (11, 12) of thermoplastic plastic foil having a thickness d with the walls attached onto each other, with the walls (11, 12) formed as corrugated areas with substantially parallel crown areas (13) and bottom areas (14), with fastening points arranged in the crown and bottom areas (13, 14), and with two adjacent, attached walls (11, 12) arranged in relation to each other such, that the crown and bottom areas (13, 14) form an angle β,
**characterized in**
that the element (10) as viewed in the flow direction of the one of the two fluid mediums consists of element sections (101, 102, 103, 104) successively arranged in a modular system wherein the flow relation between the two fluid mediums from one element section (101 - 104) to the subsequent element section (101 - 104) varies from reverse current with an angle β = 0 to cross reverse current with an angle β = 0, or from cross reverse current with an angle β = 0 to reverse current with an angle β = 0.

2. Packing element as claimed in claim 1, characterized in that a base element section (101) is designed with flow paths for a cross reverse current with an angle β between 10° and 120°, and that an element section (102) with flow paths for a reverse current with an angle β = 0 is arranged upstream of the base element section (101), and/or an element section (103) with flow paths for a reverse current with an angle β = 0 is arranged downstream of the base element section (101), and/or that an element section (104) with flow paths for a reverse current with an angle β = 0 is arranged in the course of the base element section (101).

3. Packing element as claimed in claim 1 or 2, characterized in that the walls (11, 12) thereof are formed overlapping the element sections (101 - 104) arranged successively, and are formed integral with varying directions of the crown and bottom areas (13, 14) corresponding with the flow relations in the element sections (101 - 104).

4. Packing element as claimed in one of the preceeding claims, characterized in that the flow paths in the element sections (101) for cross reverse current on the one side, and the element sections (102 - 104) for reverse current on the other side are formed with different hydraulic cross sections.

5. Packing element as claimed in claim 4, characterized in that the hydraulic cross section of the flow paths in the element sections (102 - 104) for reverse current are larger than in the element sections (101) for cross reverse current.

6. Packing element as claimed in one of the preceeding claims, characterized in that the thickness d of the walls (11, 12) in the area between the entry side (E, E′) and the exit side (A, A′) is variable, and that at least one of the edge areas of the walls (11, 12) positioned at the entry side (E, E′) and/or the exit side (A, A′) is thickened at least in sections thereof.

7. Packing element as claimed in one of the preceeding claims, characterized in that the fastening points are welding points or welding areas or clamping points or clamping areas or adhesive points or adhesive areas positioned in a flattened area.

8. Packing element as claimed in one of the preceeding claims, characterized in that the walls (11, 12) comprise a thickening in the area of the fastening points.

9. Packing element as claimed in one of the preceeding claims, characterized in that the edges of the walls (11, 12) facing the entry side (E, E′) and/or the exit side (A, A′) comprise molten edges (15).

10. Packing element as claimed in one of the preceeding claims, characterized in that the edge of the wall (11, 12) facing the entry side (E, E′) is grooved in a curve in the areas between crwon area (13) and bottom area (14) wherein the width B projected into the plane of the wall between the crown area (13) and an adjacent bottom area (14) and the largest height h of the groove form the relation B/h > 10.

11. Packing element as claimed in one of the claims 6 to 10, characterized in that the thickness d of the walls (11, 12) grows continuously in the transission area from the non-thickened to the thickened areas wherein the angle of inclination is α ≦ 60°.

12. Packing element as claimed in one of the preceeding claims, characterized in that the walls (11, 12) in the area between the crown area (13) and the bottom area (14) at least in a part thereof comprise an undulation extending in an angle of between about 10 and about 90 to the parallel crown and bottom areas wherein the distance A crown- bottom area and the height H of the undulation have the relation A/H ≧ 3.

13. Packing element as claimed in claim 12, characterized in that the undulation comprises flutes (17) extending in parallel with each other.

14. Packing element as claimed in claim 12 or 13, characterized in that the undulation comprises zick-zack-shaped flutes (19).

15. Packing element as claimed in one of the claims 12 to 14, characterized in that the undulation comprises comb shaped flutes (18, 18′) facing each other and/or offset in overlapping relation to each other.

16. Packing element as claimed in one of the preceeding claims 12 to 15, characterized in that the undulation comprises flutes (18˝) extending in parallel and spaced from the crown area (13) and from the bottom area (14).

17. Packing element as claimed in one of the preceeding claims 12 to 16, characterized in that the flutes (17, 18, 18′, 18˝, 19) of the undulation comprise a grooved surface.

18. Packing element as claimed in one of the preceeding claims, characterized in that at least between individual walls (11, 12) smooth or weakly contoured intermediate walls (21) extend at least across one element section (101 - 104).

19. Packing element as claimed in one of the preceeding claims, characterized in that the crown and bottom areas (13, 14) of two walls (11, 12) fastened onto each other in the area close to the entry side (E, E′) and close to the exit side (A, A′) are formed resting on each other and extending without an undulation about perpendicularly to the entry and exit side (E, E′, A, A′).

20. Packing element as claimed in one of the preceeding claims, characterized in that the plastic foil consists of part crystalline plastic material.

21. Packing element as claimed in one of the preceeding claims, characterized in that the plastic foil consists of a plastic alloy with an polyamid ingredient.

22. Packing element as claimed in one of the preceeding claims, characterized in that the plastic foil contains at least 50 % polypropylen or polypropylen-copolymere and fillers.

23. Packing element as claimed in one of the preceeding claims, characterized in that the plastic foil contains heat stabilizers for an operating temperature of more than 80°C.

24. Packing element as claimed in claims 22 or 23, characterized in that the fillers are Frensh chalk or glass particles particularly in form of fibers or spheres.

25. Packing element as claimed in one of the preceeding claims, characterized in that the plastic foil contains flame retarding substances.

26. Packing element as claimed in claim 25, characterized in that the flame retarding substances are antimony or antimony compounds or bromine or bromine compounds.

27. Packing element as claimed in one of the preceeding claims, characterized in that the plastic foil contains UV-stabilizing components.

28. Packing element as claimed in one of the preceeding claims, characterized in that the plastic foil comprises apertures.

29. Packing element as claimed in one of the preceeding claims having substantially the form of a cuboid, characterized in that it comprises at the front sides positioned perpendicularly to the entry and exit sides (E, E′, A, A′) and perpendicularly to the wall planes an undulation extending in parallel with the front sides at least across one flood and forming an edge with the flood forming a continuous pure reverse current flow path.

## Revendications

1. Elément de garnissage (10) pour des systèmes d'échangeur de chaleur ou de matière ou pour des systèmes de bioréacteur, dans lequel l'élément (10) est susceptible d'être parcouru à contre-courant ou à contre-courant croisé, le long de trajets d'écoulement de deux milieux fluides entrant en échange ou en réaction l'un avec l'autre, l'élément (10) comportant une face d'entrée (E) et une face de sortie (A) pour le premier fluide et une face d'entrée (E′) et une face de sortie (A′) pour le deuxième fluide, dans lequel l'élément (10) se compose d'au moins deux parois (11, 12) fixées l'une au-dessus de l'autre, d'épaisseur d, en feuille de matière synthétique thermoplastique, dans lequel chacune des parois (11, 12) est réalisée sous la forme de surfaces ondulées présentant des zones de crête (13) et des zones de semelle (14) courant de façon sensiblement parallèle, dans lequel des emplacements de fixation sont prévus dans les zones de crête et dans les zones de semelle (13, 14) et dans lequel deux parois (11, 12) voisines et fixées l'une sur l'autre, sont disposées l'une par rapport à l'autre de telle façon que les orientations des zones de crête et de semelle (13, 14) forment l'une par rapport à l'autre un angle β, caractérisé en ce que l'élément de garnissage (10) se compose, vu dans la direction d'écoulement de l'un des deux milieux fluides, de tronçons d'éléments modulaires (101, 102, 103, 104) connectés en série les uns derrière les autres, et en ce qu'à chaque fois d'un tronçon d'élément (101 à 104) au tronçon d'élément immédiatement suivant (101 à 104) le rapport d'écoulement entre les deux milieux fluides est modifié pour passer de l'écoulement à contre-courant avec un angle β = 0 à un écoulement à contre-courant croisé avec un angle β ≠ 0 ou bien pour passer de l'écoulement à contre-courant croisé avec un angle β ≠ 0 à l'écoulement à contre-courant avec un angle β = 0.

2. Elément de garnissage selon la revendication 1, caractérisé en ce qu'un tronçon d'élément de base (101) est réalisé avec des trajets d'écoulement pour un écoulement à contre-courant croisé avec un angle β compris entre 10 et 120° et en ce que ce tronçon d'élément de base (101) est branché en amont d'un tronçon d'élément (102) avec des trajets d'écoulement pour un écoulement à contre-courant avec un angle β = 0 et/ou est branché en aval d'un tronçon d'élément (103) avec des trajets d'écoulement à contre-courant avec un angle β = 0 et/ou en ce qu'un tronçon d'élément (104) avec des trajets d'écoulement pour un écoulement à contre-courant avec un angle β = 0 est branché dans le circuit du tronçon d'élément de base (101).

3. Elément de garnissage selon la revendication 1 ou 2, caractérisé en ce que ses parois (11, 12) sont réalisées chacune monobloc en recouvrant les tronçons d'élément (101 à 104) connectés en série avec une direction alternée de la zone de crête et de la zone de semelle (13, 14) correspondant à chacun des rapports d'écoulement dans le tronçon d'élément (101 à 104).

4. Elément de garnissage selon l'une des revendications précédentes, caractérisé en ce que les trajets d'écoulement dans les tronçons d'élément (101) pour l'écoulement à contre-courant croisé d'une part, et les tronçons d'élément (102 à 104) pour l'écoulement à contre-courant d'autre part, sont réalisés selon des sections hydrauliques différentes.

5. Elément de garnissage selon la revendication 4, caractérisé en ce que la section hydraulique des trajets d'écoulement dans les tronçons d'élément (102 à 104) pour l'écoulement à contre-courant, est supérieure à celle dans les tronçons d'élément (101) pour l'écoulement à contre-courant croisé.

6. Elément de garnissage selon l'une des revendications précédentes, caractérisé en ce que l'épaisseur d des parois (11, 12) dans la zone entre la face d'entrée (E, E′) et la face de sortie (A, A′) est variable et en ce qu'au moins l'une des zones de bordure des parois (11, 12) placée sur la face d'entrée (E, E′) et/ou sur la face de sortie (A, A′) est épaissie au moins par tronçons.

7. Elément de garnissage selon l'une des revendications précédentes, caractérisé en ce que les emplacements de fixation sont constitués par des points ou des surfaces de soudure ou bien par des points ou des surfaces de pincement, ou bien par des points ou des surfaces de collage, disposés dans une zone applatie ou de méplat.

8. Elément de garnissage selon l'une des revendications précédentes, caractérisé en ce que les parois (11, 12) comportent, dans la zone des emplacements de fixation, un épaississement.

9. Elément de garnissage selon l'une des revendications précédentes, caractérisé en ce que les arêtes des parois (11, 12) tournés vers la face d'entrée (E, E′) et/ou vers la face de sortie (A, A′), sont des arêtes (15) soumises à la fusion.

10. Elément de garnissage selon l'une des revendications précédentes, caractérisé en ce que l'arête de la paroi (11, 12) tournée vers la face d'entrée (E, E′) est cannelée en forme d'arc dans les zones entre la zone de crête (13) et la zone de semelle (14), et en ce que la largeur B projetée dans le plan de la paroi entre la zone de crête (13) et une zone voisine de semelle (14) et la plus grande hauteur h de la cannelure sont dans le rapport B/h > 10.

11. Elément de garnissage selon l'une des revendications 6 à 10, caractérisé en ce que l'épaisseur d des parois (11, 12) dans la zone de transition, croît continuellement des zones non épaissies aux zones épaissies, l'angle d'inclinaison étant α ≦ 60°.

12. Elément de garnissage selon l'une des revendications précédentes, caractérisé en ce que les parois (11, 12) comportent, dans la zone entre la zone de crête (13) et la zone de semelle (14) , une ondulation s'étendant au moins partiellement sur un angle compris entre environ 10° et environ 90° par rapport aux zones parallèles de crête et de semelle, la distance A entre la zone de crête et la zone de semelle et la hauteur H de l'ondulation étant dans le rapport A/H ≧ 3.

13. Elément de garnissage selon la revendication 12, caractérisé en ce que l'ondulation comporte des ondes (17) courant parallèlement les unes aux autres.

14. Elément de garnissage selon la revendication 12 ou 13, caractérisé en ce que l'ondulation comporte des ondes (19) disposées en forme de zig-zag.

15. Elément de garnissage selon l'une des revendications 12 à 14, caractérisé en ce que l'ondulation comporte des ondes en forme de peigne (18, 18′) dirigées l'une vers l'autre et/ou décalées l'une par rapport à l'autre et engagées en saillie l'une dans l'autre .

16. Elément de garnissage selon l'une des revendications 12 à 15, caractérisé en ce que l'ondulation comporte des ondes (18˝) courant parallèlement les unes aux autres, et qui sont placées à distance de la zone de crête (13) et de la zone de semelle (14).

17. Elément de garnissage selon l'une des revendications précédentes 12 à 16, caractérisé en ce que les ondes (17, 18, 18′, 18˝, 19) de l'ondulation comportent une surface rainurée.

18. Elément de garnissage selon l'une des revendications précédentes, caractérisé en ce qu'au moins entre les parois individuelles (11, 12), sont disposées des parois intermédiaires (21) s'étendant au moins sur un tronçon d'élément (101 à 104), à surface lisse ou légèrement profilée.

19. Elément de garnissage selon l'une des revendications précédentes, caractérisé en ce que les zones de crête et les zones de semelle (13, 14) sont constituées par deux parois (11, 12) fixées l'une à l'autre dans la zone proche de la face d'entrée (E, E′) et proche de la face de sortie (A, A′) disposées l'une sur l'autre et courant de façon sensiblement perpendiculaire à la face d'entrée et à la face de sortie (E, E′, A, A′).

20. Elément de garnissage selon l'une des revendications précédentes, caractérisé en ce que la feuille de matière synthétique est réalisée en matière plastique partiellement cristalline.

21. Elément de garnissage selon l'une des revendications précédentes, caractérisé en ce que la feuille de matière synthétique est constituée d'un mélange ou alliage de matière synthétique avec une partie de polyamide.

22. Elément de garnissage selon l'une des revendications précédentes, caractérisé en ce que la feuille de matière synthétique contient au moins 50% de polypropylène ou de copolymère de polypropylène et de la matière de charge.

23. Elément de garnissage selon l'une des revendications précédentes, caractérisé en ce que la feuille de matière synthétique contient des stabilisateurs thermiques pour une température de fonctionnement supérieure à 80°C.

24. Elément de garnissage selon la revendication 22 ou 23, caractérisé en ce que les matières de charge sont constituées par des particules de talc ou de verre, en particulier sous forme de fibres, de sphères ou de billes.

25. Elément de garnissage selon l'une des revendications précédentes, caractérisé en ce que la feuille de matière synthétique comporte comme constituants des substances ignifuges.

26. Elément de garnissage selon la revendication 25, caractérisé en ce que les substances ignifuges sont de l'antimoine ou des composés d'antimoire ou du brome ou des composés du brome.

27. Elément de garnissage selon l'une des revendications précédentes, caractérisé en ce que la feuille de matière synthétique comporte des additifs stabilisant aux ultraviolets.

28. Elément de garnissage selon l'une des revendications précédentes, caractérisé en ce que la feuille de matière synthétique est munie de découpes.

29. Elément de garnissage selon l'une des revendications précédentes, et se présentant sensiblement sous la forme d'un carreau, caractérisé en ce qu'il comporte sur ses faces frontales disposées perpendiculairement aux faces d'entrée et de sortie (E, E′, A, A′) et perpendiculairement au plan des parois, comme fermeture de bord ou périphérique, une ondulation courant parallèlement aux faces frontales, et s'étendant au moins sur une onde pour réaliser des trajets d'écoulement traversants purement à contre-courant.
